# FASCICULE DE BREVET EUROPEEN

(11) **EP 2 500 152 B1**
(45) Date de publication et mention de la délivrance du brevet: **11.06.2014**
(21) Numéro de dépôt: 12158176.3
(22) Date de dépôt: 06.03.2012
(51) Int. Cl.: B25J 15/00, B25J 15/02, B65G 47/90

(54) **Procédé de préhension d'objets, de mise en place dans une caisse et de préhension de cette caisse**
Verfahren zum Greifen, in eine Kiste Legen und aus dieser Kiste wieder Herausnehmen von Gegenständen
Method for gripping objects, placing same in a box and gripping said box

(30) Priorité: 15.03.2011 FR 1152080
(43) Date de publication de la demande: 19.09.2012
(73) Titulaire: Ovoconcept, 22440 Ploufragan (FR)
(72) Inventeur: Lezoraine, Jean-Louis, 22190 PLERIN (FR); Jan, Jérémy, 22960 PLEDRAN (FR)
(74) Mandataire: Regimbeau

(56) Documents cités:
- EP-A1- 2 161 227
- US-A1- 2009 320 417

## Description

La présente invention est relative à un procédé de préhension d'objets, notamment d'objets fragiles tels que des boîtes contenant des oeufs, de mise en place de ceux-ci dans une caisse et de préhension de cette caisse.

Dans le domaine du conditionnement et de la manutention d'objets fragiles, tels que des boîtes contenant des oeufs, il est maintenant très répandu d'avoir affaire à un dispositif de préhension automatique monté au bout d'un bras robotisé, dont le pilotage est assuré automatiquement par des moyens informatiques.

Ainsi, dans le domaine particulier du conditionnement des oeufs, les boîtes remplies d'oeufs, qui défilent les unes derrière les autres sur un tapis sans fin mobile, sont prises individuellement ou par groupes par le dispositif de préhension et sont déposées dans des caisses situées à proximité du tapis roulant.

L'état de la technique en la matière peut être illustré par les documents EP 1 285 870, EP 1 502 884, EP 1 832 534 et EP 2 161 227.

Ces dispositifs antérieurs, et tout particulièrement celui décrit dans le document EP 2 161 227, donnent généralement satisfaction en ce qui concerne la préhension des objets et leur mise en place dans les caisses de stockage. Toutefois, se pose le problème de la manutention des caisses remplies de boîtes, par exemple pour les disposer de manière ordonnée sur une palette, en vue de leur expédition ultérieure.

Ce problème subsiste également quand on fait usage du dispositif décrit dans le document US-A-2009/0320417.

Dans des usines dans lesquelles la cadence des robots est élevée, on a généralement recours à un deuxième type de robot qui saisit les caisses au fur et à mesure qu'elles sont remplies, pour les déposer sur la palette.

En revanche, dès lors que les cadences sont plus faibles et compte tenu du prix élevé d'un robot, il est assez courant que cette dernière manipulation se fasse manuellement, pour des raisons d'économie.

La présente invention a pour but de résoudre ce problème de manière à pouvoir réaliser les deux tâches détaillées ci-dessus en ne faisant usage que d'un seul et même robot.

Ainsi, la présente invention se rapporte, dans un premier aspect, à un procédé de préhension d'objets dont le volume s'inscrit sensiblement dans un parallélépipède rectangle, tels que des boîtes contenant des oeufs, de mise en place de ces objets dans une caisse parallélépipède rectangle, et de préhension de cette caisse, à l'aide d'un dispositif monté à l'extrémité d'un robot de manutention, ce dispositif comprenant au moins une première pince constituée de deux mâchoires mobiles entre deux positions extrêmes, à savoir une position dite "écartée" dans laquelle elles sont inaptes à enserrer un desdits objets, et une position dite "rapprochée" dans laquelle elles sont aptes à enserrer ledit objet, le mouvement d'une position à l'autre s'effectuant dans une direction générale dite "transversale", ainsi qu'également au moins deux pinces supplémentaires, à deux mâchoires supplémentaires dont au moins une est également mobile entre une position "écartée" et une position "rapprochée", le mouvement d'une position à l'autre s'effectuant dans une direction générale dite "longitudinale", perpendiculaire à ladite direction "transversale", ces au moins deux pinces supplémentaires étant inaptes à enserrer lesdits objets, quelle que soit la position de leur mâchoires supplémentaires,ledit procédé mettant en oeuvre les étapes suivantes :
a/ saisir l'un desdits objets ou un ensemble desdits objets à l'aide de ladite première pince ;
b/ le ou les déposer dans ladite caisse en écartant progressivement les mâchoires de ladite première pince ;
c/ renouveler les étapes précédentes, si nécessaire, pour remplir la caisse ;
d/ actionner lesdites pinces supplémentaires, de manière à venir saisir deux parois opposées de ladite caisse.

On comprend donc que le présent procédé permet non seulement de manipuler les objets, notamment les boîtes contenant les oeufs pour les disposer dans une caisse, mais également de saisir cette caisse, au moyen de la deuxième pince, pour déposer la caisse remplie, par exemple sur une palette de stockage. On comprend aisément que, faisant usage d'un seul robot et d'un seul dispositif, on réalise de grandes économies sur le plan pécuniaire et on gagne en espace libre autour de la machinerie.

Selon d'autres caractéristiques avantageuses et non limitatives de ce procédé :
- on fait usage d'un dispositif qui comprend des moyens d'actionnement desdites pinces supplémentaires, lesquels s'étendent dans l'espace compris entre les mâchoires de la première pince, quand elles occupent la position dite "rapprochée" ;
- on utilise un dispositif qui comprend :
   ■ un premier bloc, dit "bloc fixe", qui est pourvu de moyens de fixation au dit robot et qui est traversé en direction verticale, c'est-à-dire perpendiculairement auxdites directions longitudinale et transversale, par au moins un coulisseau ;
   ■ un deuxième bloc, dit "bloc mobile", fixé à l'extrémité inférieure dudit coulisseau, de sorte qu'il est apte à adopter une position dans laquelle il est en contact avec le premier bloc, et plusieurs positions dans lesquelles il est distant du premier bloc ;
   ■ des coulisseaux engagés transversalement dans le premier bloc, de part et d'autre de celui-ci, et dont l'extrémité libre est fixée à un troisième, respectivement un quatrième bloc, sur lesquels sont articulées la première, respectivement la deuxième mâchoire mobile ;
   ■ des coulisseaux engagés transversalement dans le deuxième bloc, de part et d'autre de celui-ci et dont l'extrémité libre est fixée à un cinquième, respectivement un sixième bloc à section transversale en "L", de sorte qu'il sont susceptibles d'occuper une position dans laquelle ils sont en contact avec ledit deuxième bloc par leurs ailes verticale et transversale, et plusieurs positions dans lesquelles ils sont distants de ce deuxième bloc ;
   ■ quatre paires de biellettes, dont l'extrémité inférieure est articulée sur l'aile transversale des cinquième et sixième blocs, l'extrémité supérieure de l'une étant articulée sur le troisième, respectivement le quatrième bloc, tandis que l'extrémité supérieure de l'autre est articulée sur un bloc supplémentaire fixé à la première, respectivement à la deuxième mâchoire ;
   ■ des moyens d'actionnement desdits coulisseaux ;
- on utilise un dispositif qui comporte, fixé audit bloc supplémentaire un moyen de support d'une mâchoire supplémentaire mobile en direction longitudinale ;
- on utilise un dispositif dont ledit moyen de support est une platine dont le rebord est rabattu à 90° vers le bas, en faisant saillie au-delà desdits blocs;
- on utilise un dispositif dont ladite mâchoire supplémentaire mobile et ledit rebord rabattu forment ensemble une desdites pinces supplémentaires ;
- on utilise un dispositif dont ladite platine est pourvue d'un moyen d'actionnement de ladite mâchoire mobile ;
- on utilise un dispositif qui comporte une butée qui s'étend en position longitudinale et médiane sous le deuxième bloc, cette butée étant mobile en direction verticale et tendant, par gravité, à être ramenée vers une position extrême basse ; et
- on utilise un dispositif qui est pourvu de ventouses mobiles selon une direction généralement transversale.

D'autres caractéristiques et avantages de la présente invention apparaîtront à la lecture de la description détaillée d'un mode de réalisation préférentiel. Cette description sera faite en référence aux dessins annexés dans lesquels :
- la figure 1 est une vue en perspective d'un dispositif utilisable selon le procédé de l'invention, la première pince de celui-ci ayant ses mâchoires en position écartée ;
- la figure 2 est une vue du dispositif de la figure 1 selon le plan de coupe P₂ de la figure 1 ;
- la figure 3 est une vue analogue à la précédente, les mâchoires de la première pince étant montrées en position écartée ;

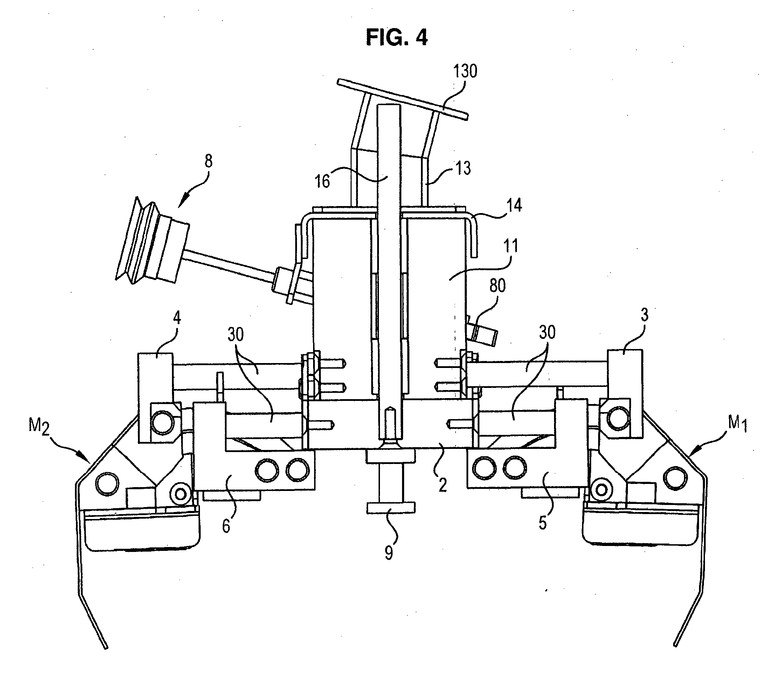

- la figure 4 est une vue en coupe selon le plan P₄ de la machine de la figure 1, les mâchoires étant en position écartée ;
- la figure 5 est une vue analogue à la précédente, les mâchoires étant en position écartée et relevée ;
- la figure 6 est une vue analogue à la figure 5, mais selon plan de coupe parallèle au précédent ;

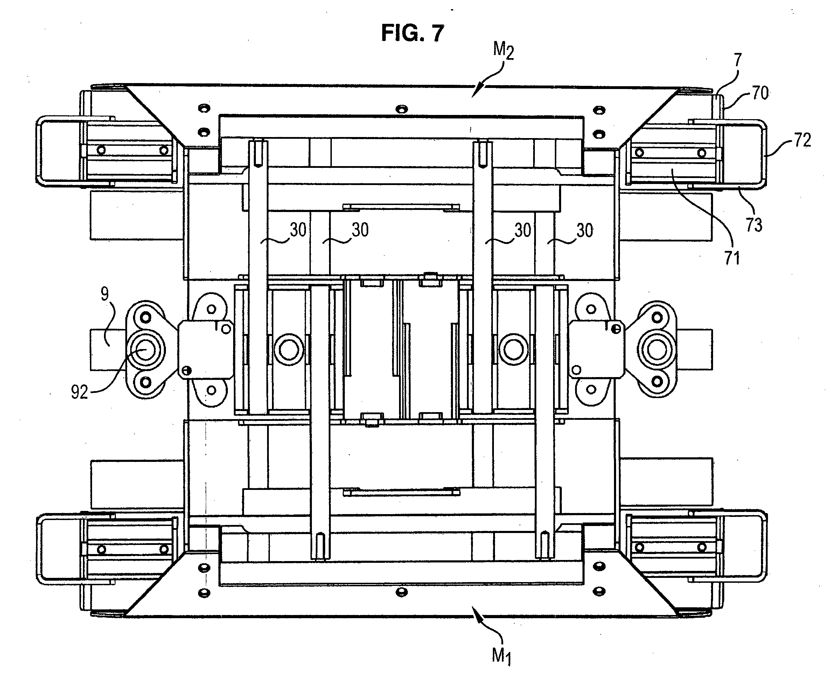

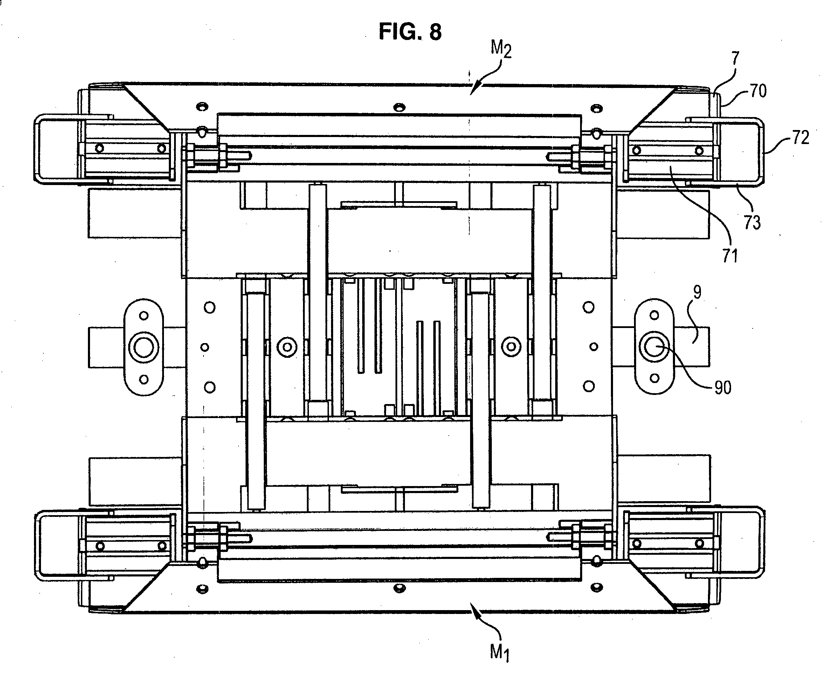

- les figures 7 et 8 sont des vues de dessus du dispositif selon des plans de coupe horizontaux et parallèles ;
- la figure 9 est une vue en perspective du dispositif , enserrant une boîte d'oeufs qui vient juste d'être déposée dans une caisse ;
- la figure 10 est une vue analogue à la précédente, une seconde boîte d'oeufs ayant été disposée sur la première ;
- la figure 11 est une vue de côté du dispositif juste avant le pincement de deux parois de la caisse ;
- enfin, la figure 12 est une vue similaire à la précédente, les parois de la caisse étant pincées par le dispositif de préhension.

Le dispositif représenté aux figures annexées comporte essentiellement six blocs référencés 1 à 6.

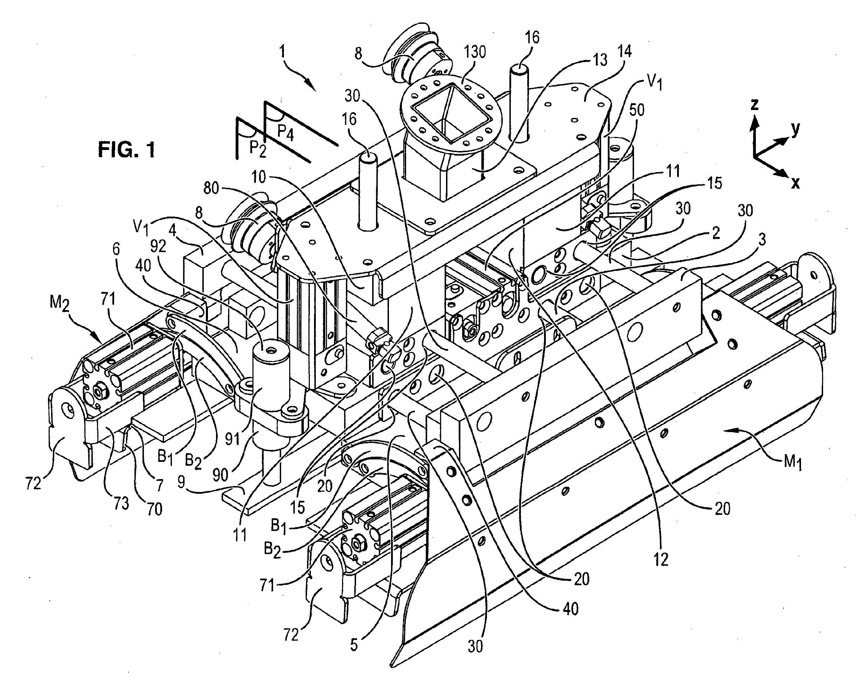

Tel qu'on peut le voir tout particulièrement à la figure 1, le premier bloc référencé 1 et appelé "bloc fixe" a ici la forme générale d'une arche avec deux pieds 11 (ou piliers) qui, vus de face, ont la forme d'un L et qui sont séparés transversalement, c'est-à-dire selon la direction "x" par un espace débouchant 12.

Cette arche comporte également un plateau 14 parallélépipédique et s'étendant longitudinalement selon la direction "y" Ce plateau s'appuie sur les pieds 11 précités.

De la face supérieure de ce bloc fixe 1 fait saillie, en position centrale, un pied 13 dont l'extrémité supérieure est bordée d'une couronne 130 de fixation à un robot automatisé et non représenté, tel qu'un robot de la marque Fanuc.

Chaque pied ou pilier 11 est traversé verticalement, c'est-à-dire selon la direction "z" par un coulisseau 16 engagé dans une ouverture traversante et cylindrique adaptée à cet effet.

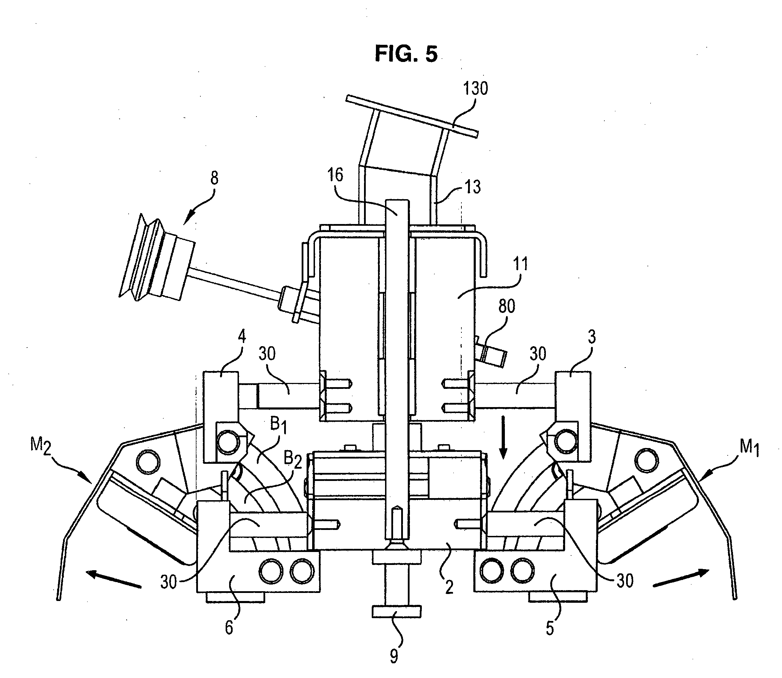

L'extrémité fixe de chaque coulisseau 16 est fixée à un deuxième bloc 2 qui sera décrit ci-après. En pilotant le déplacement des coulisseaux, on peut écarter le bloc 2 du bloc 1 (voir figure 5).

Il existe de part et d'autre de la plaque d'ouverture 14 des prolongements longitudinaux sous lesquels sont disposés des vérins V₁. Il s'agit de vérins de préférence pneumatiques, à double effet, qui permettent de déplacer un autre bloc référencé 2.

Ce deuxième bloc 2 a la forme d'un parallélépipède allongé disposé longitudinalement sous et au contact du bloc fixe 1, dans la situation illustrée à la figure 1.

En position transversale et intermédiaire, sa surface supérieure porte des vérins 50 qui ont pour fonction de permettre le rapprochement de mâchoires M₁ et M₂ décrites ci-après.

La partie inférieure du bloc 1 ainsi que le bloc 2 sont pourvus de paires d'orifices traversants 15 dans lesquels sont logés des coulisseaux cylindriques 30.

Ceux-ci sont disposés de manière alternée. Cela signifie qu'un coulisseau 30 apte à se déplacer transversalement vers un côté du bloc 1 se situe à l'aplomb d'un autre coulisseau 30 engagé dans le bloc 2 et adapté pour se déplacer transversalement de l'autre côté du bloc 1.

On a donc ainsi quatre paires de coulisseaux 30, quatre d'entre eux se déplaçant d'un côté du bloc 1 et les quatre autres de l'autre côté.

Deux coulisseaux 30 engagés dans le bloc 1 sont solidaires d'un troisième bloc 3, tandis que deux autres sont solidaires d'un quatrième bloc 4 disposé de manière symétrique par rapport aux précédents. Ces blocs 3 et 4, qui ont une forme identique, servent de supports d'articulation à des mâchoires M₁ et M₂ formant pinces, et destinés à se mouvoir transversalement.

Les quatre autres coulisseaux 30 sont, quant à eux, fixés par paires, respectivement à un cinquième bloc 5 et un sixième bloc 6, qui sont l'image l'un de l'autre dans un miroir.

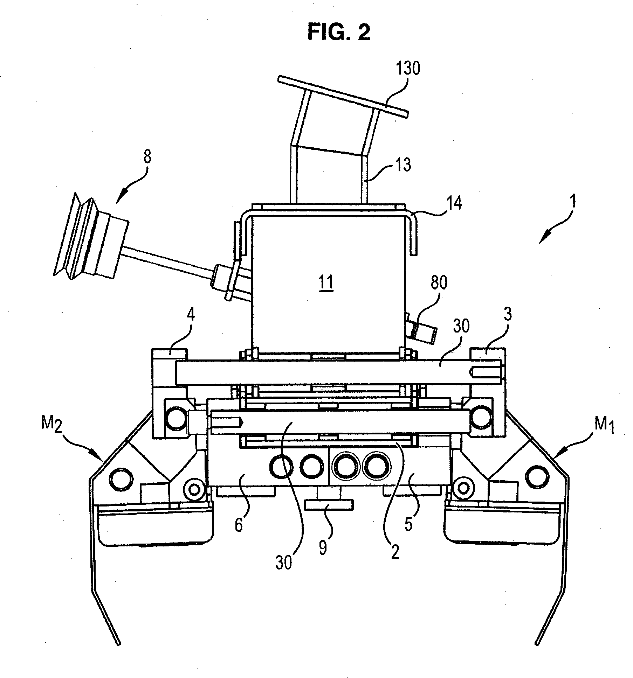

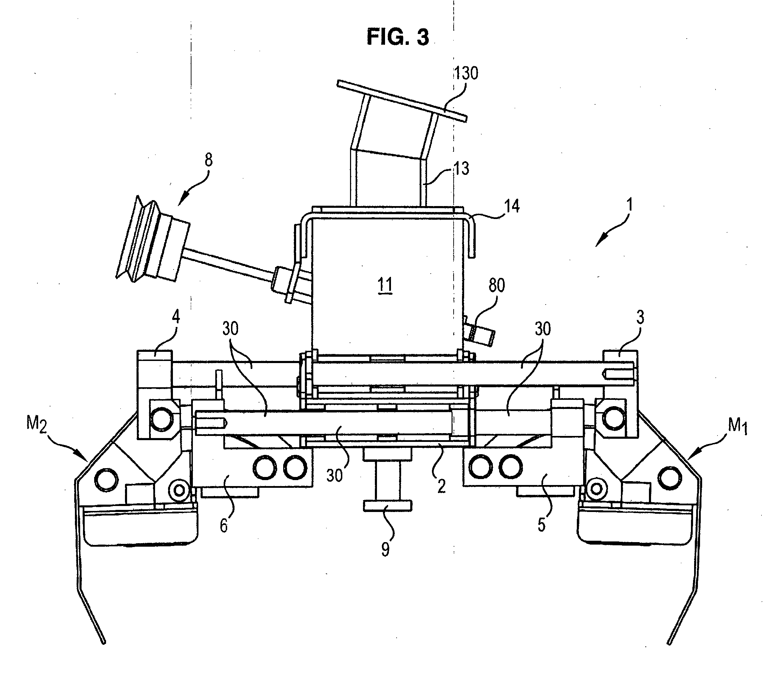

Ainsi que cela est visible, notamment à la figure 2, chaque bloc 5 et 6 affecte, en section transversale, la forme d'un "L". Ils sont susceptibles d'occuper une position dans laquelle ils sont en contact avec le deuxième bloc 2 par leurs ailes verticale et transversale (c'est le cas de la figure 2) et plusieurs positions dans lesquelles ils sont distants de ce deuxième bloc (c'est le cas des figures 3 et 5 notamment).

En comparant les figures 2 et 3, on constate qu'en provoquant simultanément l'extension des coulisseaux 30, c'est à dire ceux rattachés aux blocs 3 et 4 et ceux rattachés aux blocs 5 et 6, on provoque alors l'écartement des mâchoires M₁ et M₂.

L'aile transversale des deux blocs 5 et 6 porte deux axes d'articulation. Chacun des blocs 3 ainsi des blocs 40 qui portent les mâchoires M₁, M₂ en comportent également un.

Entre ces axes d'articulation sont montées des couples de biellettes courbes B₁ et B₂, de sorte qu'en provoquant le coulissement du coulisseau 16 traversant le bloc 1 et engagé dans le bloc 2 on provoque le déplacement des biellettes et, par là même, l'écartement des mâchoires M₁ selon une direction généralement transversale. Une telle structure est connue en soi du document EP 2 161 227 précité.

On notera, bordant chacun des piliers 11 du bloc 1 des vérins 80 qui portent à leur extrémité libre une ventouse 8 dont on expliquera plus loin la fonction.

Longitudinalement, et en position médiane, s'étend sous le bloc 2 une butée 9 qui est mobile car portée par un axe 90 engagé dans un fourreau 91. Une rondelle 92 limite le coulissement de l'axe 90 dans le fourreau 91. Là encore, on expliquera plus loin la fonction de cette butée.

On notera la présence en dessous de la face inférieure des cinquième et sixième blocs, au niveau de leurs extrémités opposées, un moyen de support d'une mâchoire supplémentaire mobile 72 en direction longitudinale.

Ce moyen de support est ici une platine 7 fixée à un bloc 40 qui supporte les mâchoires M₁ et M₂, et dont le rebord 70 est rabattu à 90° vers le bas, en faisant saillie au-delà desdits blocs 5 et 6.

Chaque mâchoire supplémentaire mobile 72 et chaque rebord rabattu forment ensemble une des pinces supplémentaires dont il a été fait état plus haut.

Bien entendu, chaque platine est pourvue d'un moyen d'actionnement de la mâchoire supplémentaire mobile 72, tel qu'un vérin pneumatique.

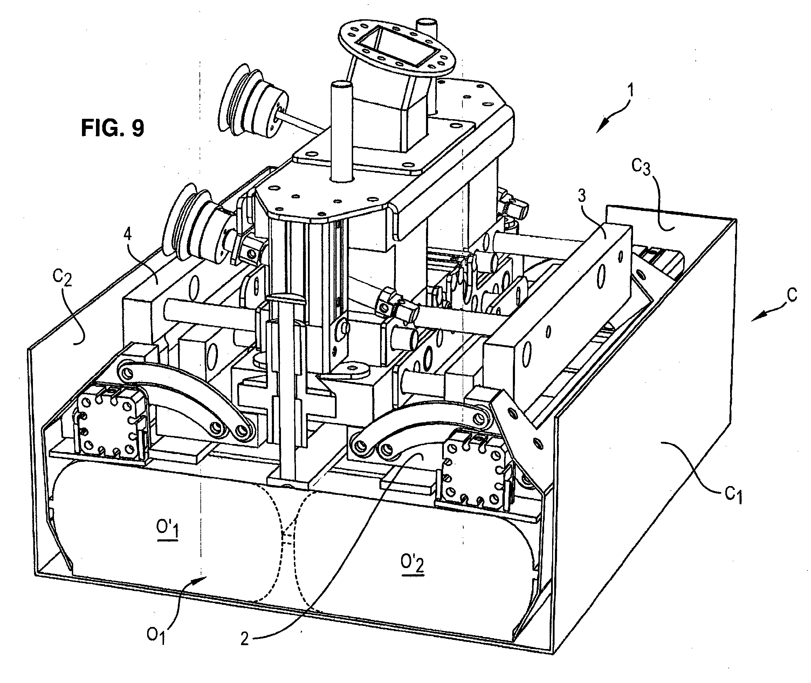

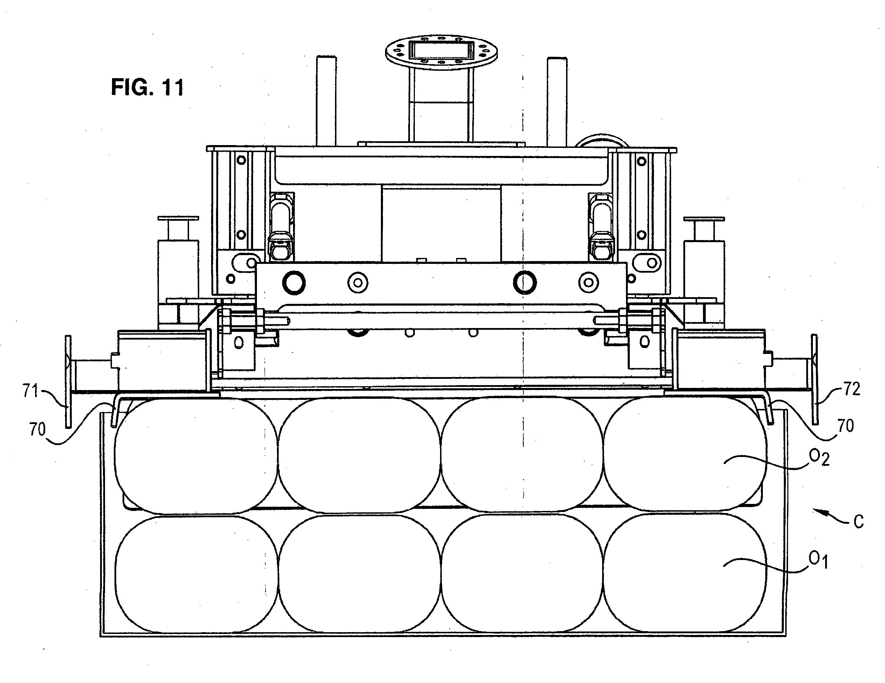

Nous allons maintenant décrire un exemple de mise en oeuvre du procédé selon l'invention, plus spécifiquement en relation avec les figures 9 à 12.

Dans cette description, on se propose de déposer des objets tels que des boîtes contenant des oeufs dans une caisse, puis de déplacer cette caisse une fois remplie.

On suppose également que des boîtes d'oeufs défilent tour à tour le long d'un tapis sans fin mobile et que le robot auquel est associé le dispositif de préhension est apte à détecter la présence de ces boîtes.

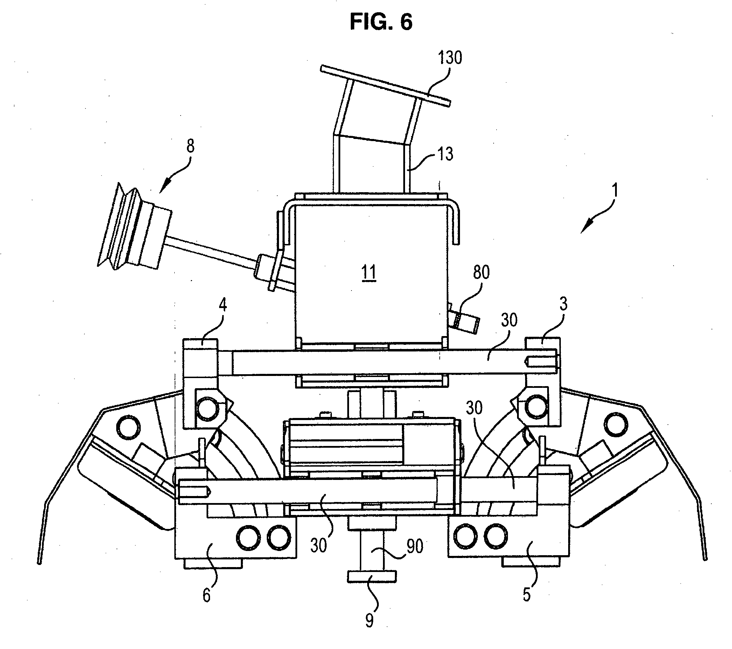

Le dispositif est tout d'abord dans la position représentée à la figure 6, le bloc 2 n'est pas en contact avec le bloc 1, les blocs 3 à 6 détachés du bloc 1, et les mâchoires M₁ et M₂ sont grandes ouvertes.

Le bras robotisé amène le dispositif au-dessus de l'objet à saisir, l'incline entre 10° et 45° met l'une des mâchoires en contact à mi-hauteur de l'objet pour le mettre en référence. Le bras robotisé remet le dispositif à l'horizontale au-dessus le l'objet, et le pilote à la descente, afin que les blocs 5 et 6 prennent appui sur la face supérieure de l'objet.

Le bloc 2 est alors rapproché du bloc 1 en suivant les coulisseaux 16, et les bielles B₁ et B₂ pivotent autour de l'axe, ce qui provoque le rapprochement des mâchoires M₁ et M₂

Le bras robotisé se soulève alors en emportant l'objet, pour venir le déposer à l'endroit souhaité. Le bras robotisé approche l'objet de sa destination et pilote la désolidarisation des blocs 1 et 2. L'objet, sous l'effet de gravité, est déposé. Ensuite, le bloc 2 s'éloigne du bloc 1, et on pilote l'ouverture des mâchoires.

Le dégagement vertical du préhenseur par le bras robotisé, permet de finaliser l'ouverture des mâchoires.

Dans l'exemple représenté ici, l'objet en question est une boîte O₁ contenant des oeufs, telle que celle représentée à la figure 9. On peut alors la déposer dans une caisse C, par exemple en carton, telle que représentée sur cette même figure 9.

Bien entendu, sur cette figure et pour plus de clarté, seules trois de ses parois latérales C₁, C₂, C₃ ont été représentées.

En lieu et place de la boîte O₁, on pourrait avoir affaire à deux boîtes plus petites O'₁ et O'₂ reliées entre elles, comme représenté en traits interrompus, également à la figure 9.

Toutefois, dans une telle circonstance, la butée 9 vient s'engager dans le sens de la flèche f de la figure 9 pour occuper l'espace qui les sépare et maintenir une disposition sensiblement horizontale des boîtes, évitant ainsi leur pliage et leur séparation.

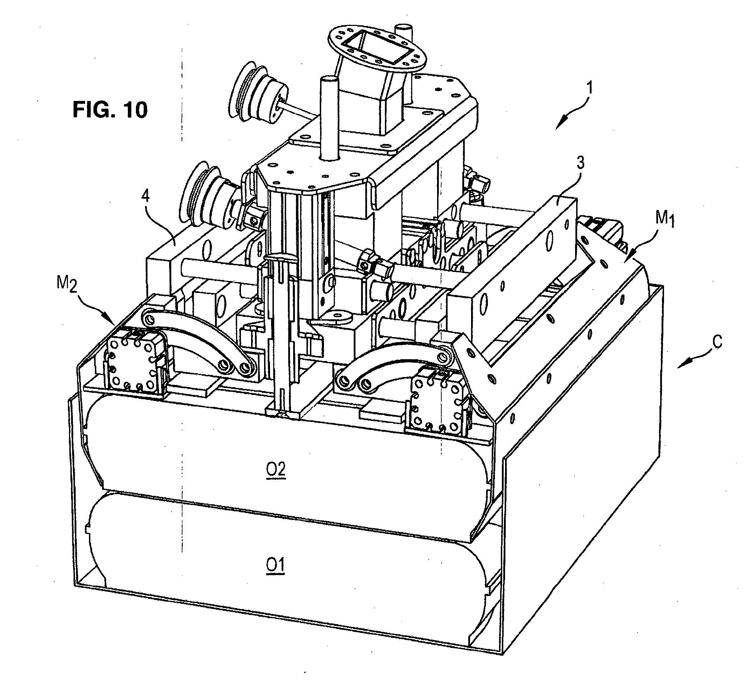

L'opération qui vient d'être décrite est éventuellement répétée de manière à obtenir un empilement de deux boîtes O₁ et O₂, comme montré à la figure 10.

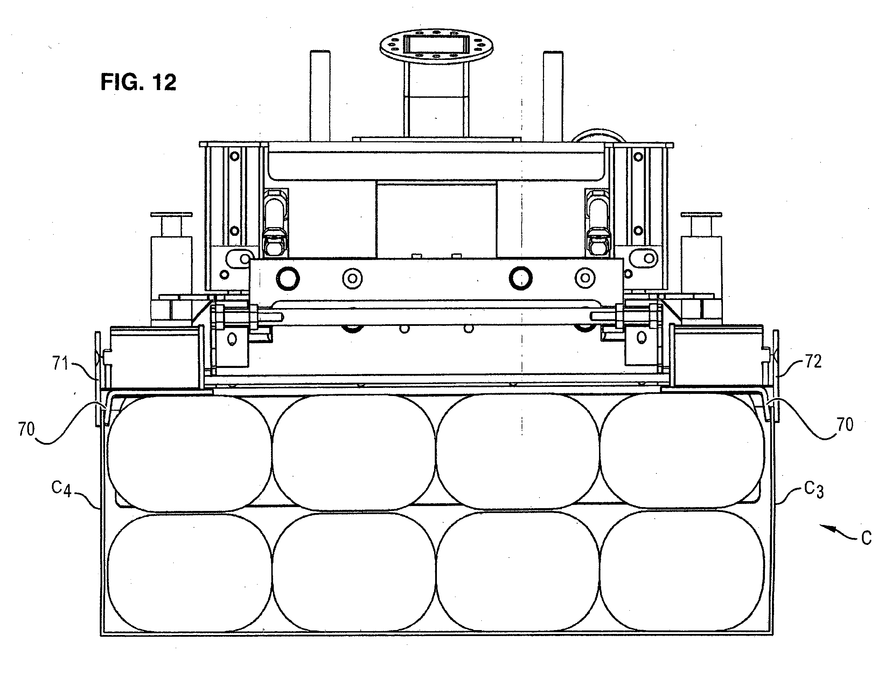

Une fois la boîte supérieure O₂ déposée, le rebord rabattu 70 de chacune des platines 7 se trouve disposé entre cette boîte et le rebord correspondant de la caisse C, tandis que la mâchoire supplémentaire mobile 72 est disposée à distance et à l'extérieur de la caisse. Il suffit alors, comme montré à la figure 12, de rapprocher les mâchoires supplémentaires mobiles 72 du rebord rabattu 71 pour pouvoir saisir la caisse C.

Ainsi, à l'aide d'un même dispositif pourvu de pinces ayant des fonctions différentes, on arrive à saisir non seulement des boîtes mais également la caisse qui les contient.

Enfin, les ventouses 8 qui ont été citées plus haut servent, par pivotement à 90° du dispositif de préhension à saisir des plaques intercalaires qu'il serait nécessaire de disposer entre deux couches de boîtes à l'intérieur de la caisse. Ces ventouses peuvent également servir à saisir des plaques qu'il serait nécessaire d'interposer entre deux couches de caisses déjà déposées sur une palette de stockage.

## Revendications

1. Procédé de préhension d'objets (O₁, O₂; O'₁, O'₂) dont le volume s'inscrit sensiblement dans un parallélépipède rectangle, tels que des boîtes contenant des oeufs, de mise en place de ces objets dans une caisse (C) parallélépipède rectangle, et de préhension de cette caisse, à l'aide d'un dispositif monté à l'extrémité d'un robot de manutention, ce dispositif comprenant au moins une première pince constituée de deux mâchoires (M₁, M₂) mobiles entre deux positions extrêmes, à savoir une position dite "écartée" dans laquelle elles sont inaptes à enserrer un desdits objets (O₁, O₂; O'₁, O'₂), et une position dite "rapprochée" dans laquelle elles sont aptes à enserrer ledit objet, le mouvement d'une position à l'autre s'effectuant dans une direction générale dite "transversale", ainsi qu'également au moins deux pinces supplémentaires, chacune à deux mâchoires supplémentaires (70, 72) dont au moins une (72) est également mobile entre une position "écartée" et une position "rapprochée", le mouvement d'une position à l'autre s'effectuant dans une direction générale dite "longitudinale", perpendiculaire à ladite direction "transversale", ces au moins deux pinces supplémentaires étant inaptes à enserrer lesdits objets (O₁, O₂; O'₁, O'₂), quelle que soit la position de leur mâchoires supplémentaires (70,72),
ledit procédé mettant en oeuvre les étapes suivantes :
a/ saisir l'un desdits objets (O₁, O₂ ; O'₁, O'₂) ou un ensemble desdits objets à l'aide de ladite première pince ;
b/ le ou les déposer dans ladite caisse (C) en écartant progressivement les mâchoires (M₁, M₂) de ladite première pince ;
c/ renouveler les étapes précédentes, si nécessaire, pour remplir la caisse (C) ;
d/ actionner lesdites pinces supplémentaires, de manière à venir saisir deux parois opposées (C₃, C₄) de ladite caisse (C).

2. Procédé selon la revendication 1, **caractérisé par le fait qu'**on fait usage d'un dispositif qui comprend des moyens d'actionnement (71) desdites pinces supplémentaires, lesquels s'étendent dans l'espace compris entre les mâchoires (M₁, M₂) de la première pince, quand elles occupent la position dite "rapprochée".

3. Procédé selon l'une des revendications précédentes, **caractérisé par le fait qu'**on utilise un dispositif qui comprend :
- un premier bloc (1), dit "bloc fixe", qui est pourvu de moyens de fixation (13, 130) au dit robot et qui est traversé en direction verticale, c'est-à-dire perpendiculairement auxdites directions longitudinale et transversale, par au moins un coulisseau (16) ;
- un deuxième bloc (2), dit "bloc mobile", fixé à l'extrémité inférieure dudit coulisseau (16), de sorte qu'il est apte à adopter une position dans laquelle il est en contact avec le premier bloc (1), et plusieurs positions dans lesquelles il est distant du premier bloc (1) ;
- des coulisseaux (30) engagés transversalement dans le premier (1) bloc, de part et d'autre de celui-ci, et dont l'extrémité libre est fixée à un troisième (3), respectivement un quatrième bloc (4), sur lesquels sont articulées la première (M₁), respectivement la deuxième mâchoire (M₂) mobile ;
- des coulisseaux (30) engagés transversalement dans le deuxième bloc (2), de part et d'autre de celui-ci et dont l'extrémité libre est fixée à un cinquième (5), respectivement un sixième bloc (6) à section transversale en "L", de sorte qu'il sont susceptibles d'occuper une position dans laquelle ils sont en contact avec ledit deuxième bloc (2) par leurs ailes verticale et transversale, et plusieurs positions dans lesquelles ils sont distants de ce deuxième bloc (2) ;
- quatre paires de biellettes (B₁, B₂), dont l'extrémité inférieure est articulée sur l'aile transversale des cinquième (5) et sixième (6) blocs, l'extrémité supérieure de l'une (B₂) étant articulée sur le troisième (3) respectivement le quatrième bloc (4), tandis que l'extrémité supérieure (B₁) de l'autre est articulée sur un bloc supplémentaire (40) fixé à la première (M₁) respectivement à la deuxième mâchoire (M₂) ;
- des moyens d'actionnement desdits coulisseaux (16, 30).

4. Procédé selon la revendication 3, **caractérisé par le fait qu'**on utilise un dispositif qui comporte, fixé audit bloc supplémentaire (40) un moyen de support d'une mâchoire supplémentaire (72) mobile en direction longitudinale.

5. Procédé selon la revendication 4, **caractérisé par le fait qu'**on utilise un dispositif dont ledit moyen de support est une platine (7) dont le rebord est rabattu à 90° vers le bas, en faisant saillie au-delà desdits blocs (5, 6).

6. Procédé selon la revendication 5, **caractérisé par le fait qu'**on utilise un dispositif dont ladite mâchoire supplémentaire mobile (72) et ledit rebord rabattu forment ensemble une desdites pinces supplémentaires.

7. Procédé selon l'une des revendications 5 et 6, **caractérisé par le fait qu'**on utilise un dispositif dont ladite platine (7) est pourvue d'un moyen d'actionnement (71) de ladite mâchoire mobile.

8. Procédé selon l'une des revendications 3 à 7, **caractérisé par le fait qu'**on utilise un dispositif qui comporte une butée (9) qui s'étend en position longitudinale et médiane sous le deuxième bloc (2), cette butée (9) étant mobile en direction verticale et tendant, par gravité, à être ramenée vers une position extrême basse.

9. Procédé selon l'une des revendications précédentes, **caractérisé par le fait qu'**on utilise un dispositif qui est pourvu de ventouses (8) mobiles selon une direction généralement transversale.

10. Procédé selon l'une des revendications 1 à 9, dans lequel on superpose au moins deux couches desdits objets (O₁, O₂), **caractérisé par le fait que** l'on met en oeuvre l'étape d/ alors que la première pince retient encore la couche supérieure d'objets.

11. Procédé selon l'une des revendications 1 ou 10, **caractérisé par le fait que** l'étape d/ est mise en oeuvre en plaquant une première mâchoire supplémentaire (70) de chaque pince supplémentaire contre la face interne d'une paroi (C₃, C₄) de la caisse, et en actionnant la seconde mâchoire supplémentaire (72), mobile, de chaque pince supplémentaire en direction de ladite première mâchoire supplémentaire (70).

## Patentansprüche

1. Verfahren zum Greifen von Gegenständen (O₁,O₂;O₁',O₂') eines Volumens, das in einem im Wesentlichen rechtwinkeligen Quader einbeschrieben ist, beispielsweise Schachteln mit darin enthaltenen Eiern, zum Legen dieser Gegenstände in eine rechtwinklige quaderförmige Kiste (C) und zum Greifen dieser Kiste mit Hilfe einer Vorrichtung, die an dem Ende eines Handhabungsroboters angebracht ist, wobei diese Vorrichtung aufweist:
mindestens eine erste Greifzange, die aus zwei Backen (M₁,M₂) besteht, die zwischen zwei Endpositionen bewegbar sind, nämlich zwischen einer sogenannten "auseinander gerückten" Position, in welcher sie nicht fähig sind, einen der Gegenstände (O₁,O₂;O₁',O₂') zu umschließen, und einer sogenannten "angenäherten" Position, in welcher sie fähig sind, den Gegenstand zu umschließen, wobei die Bewegung von einer Position in die andere in einer, allgemein gesprochen, sogenannten "transversalen" Richtung erfolgt, sowie außerdem
mindestens zwei zusätzliche Greifzangen, deren jede zwei zusätzliche Backen (70,72) aufweist, von denen mindestens eine (72) ebenfalls zwischen einer "auseinander gerückten" Position und einer "angenäherten" Position bewegbar ist, wobei die Bewegung von einer Position in die andere in einer sogenannten "longitudinalen" allgemeinen Richtung, die senkrecht zur transversalen Richtung ist, erfolgt, wobei diese mindestens zwei zusätzlichen Greifzangen nicht fähig sind, die Gegenstände (O₁,O₂;O₁',O₂') zu umschließen, ganz gleich, in welcher Position sich ihre zusätzlichen Backen (70,72) befinden,
wobei das Verfahren die folgenden Schritte ausführt:
a/ Ergreifen eines der Gegenstände (O₁,O₂;O₁',O₂') oder einer Menge der Gegenstände mit Hilfe der ersten Greifzange;
b/ Legen dieses Gegenstands oder dieser Gegenstände in die Kiste (C), während die Backen (M₁,M₂) der ersten Greifzange nach und nach auseinander rücken;
c/ Wiederholen der vorstehenden Schritte, falls notwendig, um die Kiste (C) zu füllen;
d/ Betätigen der zusätzlichen Greifzangen derart, dass zwei gegenüberliegende Wände (C₃,C₄) der Kiste (C) in Eingriff kommen.

2. Verfahren nach Anspruch 1, **dadurch gekennzeichnet, dass** eine Vorrichtung verwendet wird, die Betätigungseinrichtungen (71) zum Betätigen der zusätzlichen Greifzangen aufweist, wobei die Betätigungseinrichtungen sich in einem Raum zwischen den Backen (M₁,M₂) der ersten Greifzange erstrecken, wenn diese in der "angenäherten" Position sind.

3. Verfahren nach einem der vorstehenden Ansprüche, **dadurch gekennzeichnet, dass** eine Vorrichtung verwendet wird, die aufweist:
- einen ersten Block (1), genannt "stationärer Block", der mit Befestigungseinrichtungen (13,130) versehen ist, um ihn an dem Roboter zu befestigen, und der in vertikaler Richtung, das heißt senkrecht zur longitudinalen und transversalen Richtung, von mindestens einem Schieber (16) durchquert wird;
- einen zweiten Block (2), genannt "beweglicher Block", der an dem unteren Ende des Schiebers (16) angebracht ist, so dass er eine Position, in welcher er in Kontakt mit dem ersten Block (1) ist, und mehrere Positionen einnehmen kann, in welchen er im Abstand von dem ersten Block (1) ist;
- Schieber (30), die transversal im ersten Block (1) an dessen beiden Seiten eingesetzt sind und deren jeweilige freie Enden an einem dritten (3) bzw. vierten (4) Block angebracht sind, an denen jeweils die erste (M₁) bzw. zweite (M₂) bewegliche Backe gelenkig angebracht sind;
- Schieber (30), die transversal im zweiten Block (2) an dessen beiden Seiten eingesetzt sind und deren jeweilige freie Enden an einem fünften (5) bzw. sechsten (6) Block, die einen "L"-förmigen transversalen Querschnitt haben, angebracht sind, so dass diese Blöcke eine Position einnehmen können, in welcher sie über ihre vertikalen und transversalen Flügel in Kontakt mit dem zweiten Block (2) sind, sowie mehrere Positionen einnehmen können, in welchen sie im Abstand von diesem zweiten Block (2) sind;
- vier Paare Koppelstangen (B₁,B₂), deren untere Enden gelenkig an dem transversalen Flügel des fünften (5) und sechsten (6) Blocks angebracht sind, wobei das obere Ende der einen (B₂) gelenkig an dem dritten (3) bzw. vierten (4) Block angebracht ist, während das obere Ende der anderen (B₁) gelenkig an einem zusätzlichen Block (40) angebracht ist, der an der ersten (M₁) bzw. an der zweiten (M₂) Backe angebracht ist;
- Einrichtungen zum Betätigen der Schieber (16,30).

4. Verfahren nach Anspruch 3, **dadurch gekennzeichnet, dass** eine Vorrichtung verwendet wird, die eine an dem zusätzlichen Block (40) angebrachte Trägereinrichtung zum Tragen einer in Längsrichtung bewegbaren zusätzlichen Backe (72) aufweist.

5. Verfahren nach Anspruch 4, **dadurch gekennzeichnet, dass** eine Vorrichtung verwendet wird, deren Trägereinrichtung eine Platte (7) ist, deren Rand um 90° nach unten gebogen ist, so dass ein über die Blöcke (5,6) hinausragender Vorsprung gebildet ist.

6. Verfahren nach Anspruch 5, **dadurch gekennzeichnet, dass** eine Vorrichtung verwendet wird, deren bewegbare zusätzliche Backe (72) und der gebogene Rand miteinander eine der zusätzlichen Greifzangen bilden.

7. Verfahren nach einem der Ansprüche 5 und 6, **dadurch gekennzeichnet, dass** eine Vorrichtung verwendet wird, deren Platte (7) mit einer Betätigungseinrichtung (71) zum Betätigen der bewegbaren Backe versehen ist.

8. Verfahren nach einem der Ansprüche 3 bis 7, **dadurch gekennzeichnet, dass** eine Vorrichtung verwendet wird, die einen Anschlag (9) aufweist, der sich in longitudinaler und zentraler Position unterhalb des zweiten Blocks (2) erstreckt, wobei der Anschlag (9) in vertikaler Richtung bewegbar ist und danach strebt, durch Schwerkraft in eine tiefe Endposition zurückgebracht zu werden.

9. Verfahren nach einem der vorstehenden Ansprüche, **dadurch gekennzeichnet, dass** eine Vorrichtung verwendet wird, die mit Saugnäpfen (8) versehen ist, die in einer im Allgemeinen transversalen Richtung bewegbar sind.

10. Verfahren nach einem der Ansprüche 1 bis 9, in welchem mindestens zwei Schichten der Gegenstände (O₁,O₂) übereinander angeordnet werden, **dadurch gekennzeichnet, dass** der Schritt d/ ausgeführt wird, während die erste Greifzange noch die obere Schicht der Gegenstände hält.

11. Verfahren nach einem der Ansprüche 1 oder 10, **dadurch gekennzeichnet, dass** der Schritt d/ ausgeführt wird, indem eine erste zusätzliche Backe (70) jeder zusätzlichen Greifzange gegen die Innenfläche einer Wand (C₃,C₄) der Kiste gedrückt wird und indem die zweite bewegliche zusätzliche Backe (72) jeder zusätzlichen Greifzange in eine Richtung hin zur ersten zusätzlichen Backe (70) betätigt wird.

## Claims

1. Method for gripping objects (O₁, O₂; O'₁, O'₂), the volume of which falls substantially within a rectangular parallelepiped, such as boxes containing eggs, for placing these objects in a rectangular parallelepipedal case (C), and for gripping this case, using a device mounted on the end of a handling robot, this device comprising at least one first gripper formed of two jaws (M₁, M₂) which are movable between two extreme positions, namely what is referred to as a "spread" position in which they are incapable of clasping one of said objects (O₁, O₂; O'₁, O'₂), and what is referred to as a "close" position in which they are capable of clasping said object, the movement from one position to the other taking place in a general direction referred to as "transverse", and also at least two additional grippers, each having two additional jaws (70, 72), at least one (72) of which is also movable between a "spread" position and a "close" position, the movement from one position to the other taking place in a general direction referred to as "longitudinal", which is perpendicular to said "transverse" direction, these at least two additional grippers being incapable of clasping said objects (O₁, O₂; O'₁, O'₂) whatever the position of their additional jaws (70, 72),
said method implementing the following steps:
a/ grasping one of said objects (O₁, O₂; O'₁, O'₂) or a set of said objects using said first gripper;
b/ placing it or them in said case (C) by gradually moving the jaws (M₁, M₂) of said first gripper apart;
c/ repeating the preceding steps, if necessary, in order to fill the case (C);
d/ actuating said additional grippers so as to grasp two opposing walls (C₃, C₄) of said case (C).

2. Method according to Claim 1, **characterised in that** a device is used which comprises actuating means (71) for said additional grippers, which means extend into the space between the jaws (M₁, M₂) of the first gripper when they are in what is referred to as the "close" position.

3. Method according to one of the previous claims, **characterised in that** a device is used which comprises:
- a first block (1), referred to as "fixed block", which is provided with means (13, 130) for fastening to said robot and which is traversed in the vertical direction, that is to say perpendicular to said longitudinal and transverse directions, by at least one slide (16);
- a second block (2), referred to as "movable block", fastened to the lower end of said slide (16), so that it is capable of adopting a position in which it is in contact with the first block (1), and several positions in which it is remote from the first block (1);
- slides (30) which are engaged transversely in the first block (1), on either side thereof, and the free end of which is fastened to a third (3) or a fourth block (4), respectively, on which are articulated the first (M₁) and the second movable jaw (M₂), respectively;
- slides (30) which are engaged transversely in the second block (2), on either side thereof, and the free end of which is fastened to a fifth (5) or a sixth block (6), respectively, having an L-shaped cross-section, so that they could occupy a position in which they are in contact with said second block (2) by their vertical and transverse wings, and several positions in which they are remote from this second block (2);
- four pairs of links (B₁, B₂), the lower end of which is articulated to the transverse wing of the fifth (5) and sixth (6) blocks, the upper end of one link (B₂) being articulated to the third (3) or the fourth block (4), whereas the upper end (B₁) of the other link is articulated to an additional block (40) fastened to the first (M₁) or to the second jaw (M₂);
- actuating means for said slides (16, 30).

4. Method according to Claim 3, **characterised in that** a device is used which comprises, fastened to said additional block (40), a support means for an additional jaw (72) which is movable in the longitudinal direction.

5. Method according to Claim 4, **characterised in that** a device is used of which said support means is a plate (7), the flange of which is bent over at 90° towards the bottom, protruding beyond said blocks (5, 6).

6. Method according to Claim 5, **characterised in that** a device is used of which said additional movable jaw (72) and said bent-over flange together form one of said additional grippers.

7. Method according to one of Claims 5 and 6, **characterised in that** a device is used of which said plate (7) is provided with a means (71) for actuating said movable jaw.

8. Method according to one of Claims 3 to 7, **characterised in that** a device is used which comprises a stop (9) which extends in the longitudinal and median position beneath the second block (2), this stop (9) being movable in the vertical direction and tending, by gravity, to be brought towards a bottom extreme position.

9. Method according to one of the previous claims, **characterised in that** a device is used which is provided with suction cups (8) which are movable in a generally transverse direction.

10. Method according to one of Claims 1 to 9, in which at least two layers of said objects (O₁, O₂) are superposed, **characterised in that** step d/ is implemented while the first gripper still holds the upper layer of objects.

11. Method according to one of Claims 1 or 10, **characterised in that** step d/ is implemented by flattening a first additional jaw (70) of each additional gripper against the inner face of a wall (C₃, C₄) of the case, and by actuating the second movable additional jaw (72) of each additional gripper in the direction of said first additional jaw (70).
